# EUROPÄISCHE PATENTSCHRIFT

(11) **EP 1 905 673 B1**
(45) Veröffentlichungstag und Bekanntmachung des Hinweises auf die Patenterteilung: **19.05.2010**
(21) Anmeldenummer: 07017819.9
(22) Anmeldetag: 12.09.2007
(51) Int. Cl.: B62D 11/20

(54) **Fahrantrieb insbesondere eines Universalfahrzeuges für Unterstützungssysteme**
Traction drive in particular for a universal vehicle for support systems
Entraînement de roulement, en particulier d'un véhicule universel pour systèmes de soutien

(30) Priorität: 27.09.2006 DE 102006045995
(43) Veröffentlichungstag der Anmeldung: 02.04.2008
(73) Patentinhaber: Rheinmetall Landsysteme GmbH, 24107 Kiel (DE)
(72) Erfinder: Hass, Frank, 24235 Wendtorf (DE); Witt, Tino, 24146 Kiel (DE); Bernhard, Björn, 24107 Kiel (DE)
(74) Vertreter: Dietrich, Barbara

(56) Entgegenhaltungen:
- DE-A1- 4 005 356
- DE-A1- 19 510 893
- DE-C- 928 864
- DE-U1- 29 609 176
- JP-A- 61 006 074

## Beschreibung

Die Erfindung betrifft einen Fahrantrieb eines Fahrzeuges insbesondere für ein Universalfahrzeug für Unterstützungssysteme.

Bekannt sind Gefechtsfahrzeuge, gepanzerte oder ungepanzerte, die eine hohe Modularität aufweisen, um den unterschiedlichsten Anforderungen der heutigen Zeit an militärische Fahrzeuge zu entsprechen. Diese können Rad- oder Kettenlaufwerke besitzen (DE 101 33 147 B4, DE 10 2004 006 152 A1).

Kettenfahrzeuge haben jedoch den großen Nachteil, dass nur eine geringe Bewegungsflexibilität des Fahrzeuges bedingt durch die großen Ketten gegeben ist. Der damit verbundene Bauraum für diese Kettenlaufwerke ist zudem sehr hoch.

Insbesondere für leichte Fahrzeuge sind derartige Kettenlaufwerke daher oft unerwünscht.

Um auch größere Fahrzeuge manövrierbarer zu gestalten, werden in der Praxis diese Fahrzeuge unterteilt, so bekannt von der Firma Hägglund. Das Geländetransportfahrzeug Bv 206 dieser Firma ist getrennt in ein Vorderfahrzeug und ein Hinterfahrzeug mit beidseitig am Vorder- als auch am Hinterfahrzeug angebrachten umlaufenden Ketten. Beide Fahrzeugteile sind mittels einer Knicklenkung miteinander verbunden. Der Antrieb des Vorderfahrzeuges wirkt dabei auch auf die Ketten des Hinterfahrzeuges.

Aus der DE 101 00 775 A1 ist gleichfalls ein knickgelenktes Fahrzeug bekannt. Dieses weist zwei in Fahrzeuglängsrichtung hintereinander liegende Chassisteile auf, an denen einerseits eine Vorderachse und andererseits eine Hinterachse befestigt sind. Die Chassisteile stehen über eine im Wesentlichen vertikal ausgerichteten Knickachse derart miteinander in Verbindung, dass sie sich unter Verwendung einer Steuereinrichtung gegeneinander verschwenken lassen und somit eine Fahrzeuglenkung ermöglichen.

Zwar ist dieser Gesamtzug wesentlich beweglicher als beispielsweise ein herkömmlicher Pionierpanzer, jedoch ist eine Trennung des Fahrzeuges in ein Hauptfahrzeug und einen Anhänger in der Praxis unerwünscht.

Aus der DE 40 05 356 A1 ist ein Fahrzeug mit Allradantrieb bekannt, wobei das Fahrzeug mehrere Fahrwerke aufweist, deren Achsen zueinander verstellbar sind. An jeder Achse sind mindestens zwei Räder angeordnet, die mit einem Motor pro Achse oder den Einzelrädern zugeordnete Antriebe ausgestattet sind, wodurch ein Steuern oder Wenden des Fahrzeuges oder ein Drehen auf der Stelle ohne Bewegung der Last ermöglicht wird. Jedes Rad kann auch als Radkette ausgebildet sein.

Die DE 928 864 C betrifft ein Fahrzeug mit Raupenfahrgestellen in Drehschemelanordnung für die Aufnahme und Beförderung schwerster Lasten. Dazu wird an jedem der beiden Fahrzeugenden je ein mit zwei getrennt motorisch gleich- oder gegensinnig antreibbaren, parallel laufenden Raupenketten versehenes Raupenfahrgestell eingebunden. Der Antrieb der zwei Raupenketten eines jeden Fahrgestells erfolgt vom Fahrzeugmotor aus über ein gemeinsames Differentialgetriebe.

Mit der DE 296 09 176 U1 wird ein Fahrzeug mit einer gelenkten, zwillingsbereiften Hinterachse beschrieben. Um eine einfache Realisierung einer Hinterachslenkung zu erreichen, ist ein am Fahrzeugrahmen angeordneter Drehkranz vorgesehen, sodass die Hinterachse, die in ihrer Länge völlig starr ist, komplett verschwenkt werden kann, also auch der bei einer Achsschenkellenkung nicht verschwenkte Mittelbereich. Zur Verbindung der Achse mit dem Drehkranz ist ein Lenkschemel vorgesehen, an dem die Achse federnd gelagert ist.

Die Erfindung stellt sich die Aufgabe, Fahrzeuge mit Kettenlaufwerken manövrierfähiger zu machen und somit ein Kettenfahrzeug mit verbesserten Eigenschaften aufzuzeigen.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, ein Fahrzeug mit mehreren kleineren Kettenlaufwerken am Fahrzeug zu konzipieren und dadurch eine sehr hohe Beweglichkeit des Fahrzeuges zu erreichen.

Mehrkettenlaufwerke als solche sind von den so genannten "Mattracks" her bekannt und stellen eine Nachrüstvariante für Radfahrzeuge dar. Sie werden jeweils an den vorhandenen Radachsen angebracht.

Ein gelenktes und gefedertes Gummiraupenbandlaufwerk für derartige Mehrketten-Laufwerke wird beispielsweise mit der DE 200 00 737 U1 offenbart. Das Gummiraupenlaufband ist hierbei um einen Laufbandwagen und zwei obere Tragrollen geführt, sodass der Laufbandwagen zum Maschinenrahmen hin über eine Schwinge und ein oder mehreren Federelementen federnd gelagert ist.

Die neu konzipierten Mehrketten-Laufwerke hingegen weisen Eigenschaften eines Drehschemels und in Weiterführung eines Knicklenkers auf.

Die herkömmliche Drehschemellenkung findet vor allem im Bereich von Anhängerwagen, Handkarren und Pferdefuhrwerken Verwendung. Sie ist ein Lenksystem mit einem schemelartigen Träger für Achse und Räder und steckt auf einem drehbar gelagerten Zapfen.

Bei Knicklenkern erfolgt die Lenkung bekanntlich nicht durch Auslenkung einzelner Räder, sondern durch Knicken eines Gelenkes im Fahrzeugrahmen. Diese Art von Lenkung sieht man häufig bei selbst fahrenden Bau- und Arbeitsmaschinen, bei denen es auf eine gute Wendigkeit ankommt. Ein so genannter Knicklenker wird auf der Internetseite http://www.stbg.de/Zeitung/se602/bell.htm publiziert.

Bei der Konzipierung der Mehrketten-Laufwerke ist vorgesehen, dass bevorzugt mehrere so genannte Drehschemeleinheiten über eine Art Drehkranz mit dem eigentlichen Fahrzeugchassis verbunden sind. Die Abfederung der Drehschemeleinheiten zum Fahrzeug erfolgt beispielsweise mittels hydropneumatischer Drehschemel - Federn.

Die vorgeschlagene Drehschemeleinheit umfasst zudem wenigstens ein rechts und ein links angebrachtes Kettenlaufwerk. Die beidseitigen Laufwerke weisen ihrerseits Federbeine auf. Die paarweisen Laufwerke werden vorzugsweise durch einen gemeinsamen Antrieb angetrieben. Dieser Antrieb befindet sich dabei bevorzugt in jeder der Drehschemeleinheiten und kann dabei ein herkömmlicher Motor sein, beispielsweise ein 10 Zylinder TDI Motor, welcher mit einem Getriebe mit Differential verbunden ist. Über dieses wird der Antrieb auf die Laufketten in bekannter Art und Weise übertragen. Vorgesehen ist auch die Einbindung eines Kraftstofftanks in / an die Drehschemeleinheit.

Die vordere und hintere Drehschemeleinheit und damit die Laufwerke werden vorzugsweise über Lenkzylinder gelenkt bzw. verdreht. Dazu sind die Lenkzylinder einseitig mit der Drehschemeleinheit und dem Fahrzeug verbunden.

Die Kombination beider Systeme in den Mehrketten-Laufwerken hat den Vorteil, dass eine schnellere Geländefahrt als bei normalen Kettenfahrzeugen erreicht wird. Die Knicklenkung eliminiert die bekannten Nachteile einer Differenzdrehzahllenkung. Die Beweglichkeit der Drehschemel um die Längsachse verhindert eine Überlastung der einzelnen Ketten. Die Beweglichkeit der Drehschemel um die Querachse erlaubt eine sehr gute Anpassung des Fahrzeugs an die jeweilige Geländekontur. Bei verriegelten Drehschemeln wird zudem eine sehr gute Grabenüberschreitfähigkeit des Fahrzeugs garantiert. Das Ankippen der Drehschemel ermöglicht des Weiteren sehr gute Böschungswinkel. Auch ist das Losbrechen aus schwerem Boden mittels Einknicken machbar.

Weitere Vorteile sind eine geringere Bauhöhe als bei großen Einzel-Laufwerken, das Entfallen des teueren Überlagerungs-Lenkantriebes sowie das Absenken des Fahrzeugs ohne Einschränkung der Bodenfreiheit. Mit den neuartigen Mehrketten-Laufwerken ist auch das seitwärts Fahren unproblematisch. Das seitliche "Ausstrecken" der Laufwerke durch asymmetrischen Drehpunkt erhöht zudem die Standsicherheit bei Bagger- und Kranarbeiten. Die Mehrketten-Laufwerke ermöglichen auch eine gute Entkopplung zur Fahrzeugwanne, wodurch weniger Vibration eingeleitet wird. Ein ungefedertes Aufsetzen des Leitrades beim Durchfedern der Laufrollen ist ausgeschlossen. Ein weiterer positiver Aspekt ist der einfache Kettenwechsel. Dies kann durch selbstständiges Anheben einer Laufwerk-Seite erfolgen. Auch wird dadurch der Schutz der Besatzung gegen Minen erhöht.

Durch eine geradzahlige Anzahl von Ketten-Laufwerken, wie vier, sechs, acht etc., werden insbesondere die Vorteile von Rad- und Kettenlaufwerken vereint.

Anhand eines Ausführungsbeispiels mit Zeichnung soll die Erfindung näher erläutert werden.

Es zeigt:
- Fig. 1: eine Drehschemeleinheit im Rohbau,
- Fig. 2: die Drehschemeleinheit aus Fig. 1 mit zwei Laufwerken, Antrieb, Getriebe und Kraftstofftank,
- Fig. 3: die Einbindung beider Drehschemeleinheiten in einen Fahrzeugunterbau,
- Fig. 4: ein Vier-Laufwerk-Fahrzeug mit der erfindungsgemäßen Drehschemel- und Knicklenkung.

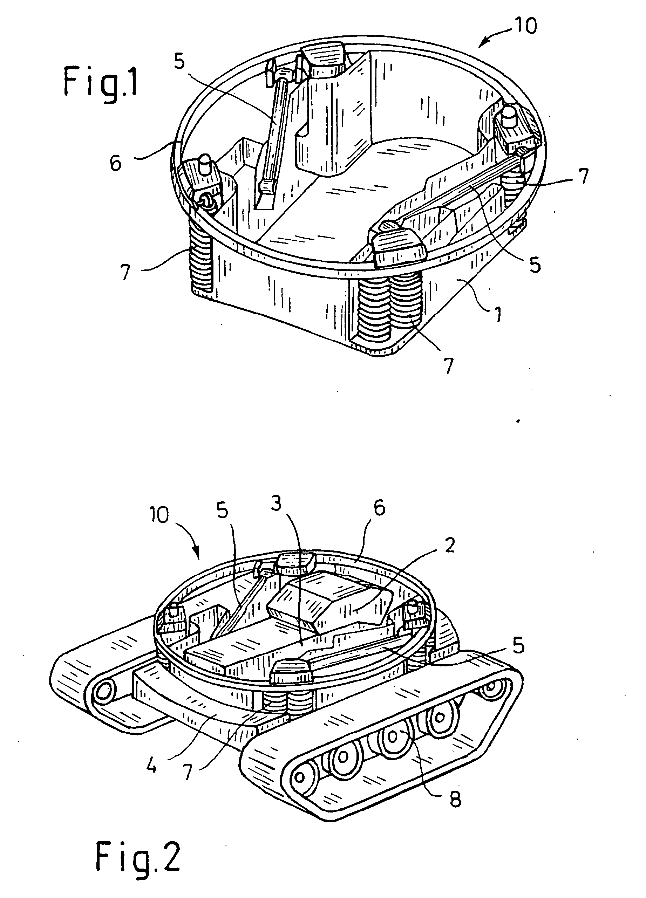

In Fig. 1 dargestellt ist ein Chassis 1 einer Drehschemeleinheit 10 zur Aufnahme eines in Fig. 2 näher dargestellten Antriebes 2, eines Getriebes 3 sowie eines angedeuteten Kraftstoffbehälters 4. Schubstützen 5 sind mit dem Chassis 1 und einem Drehkranz 6 verbunden (wird noch ausgeführt). Zwischen Drehkranz 6 und dem Chassis 1 sind zudem, in diesem konkreten Ausführungsbeispiel bevorzugt, hydropneumatische Drehschemel-Federungen 7 eingebunden. Mit 8 sind ein rechts und links am Chassis 1 angebrachtes Kettenlaufwerk mit Federbeinen als Laufkettenpaare gekennzeichnet.

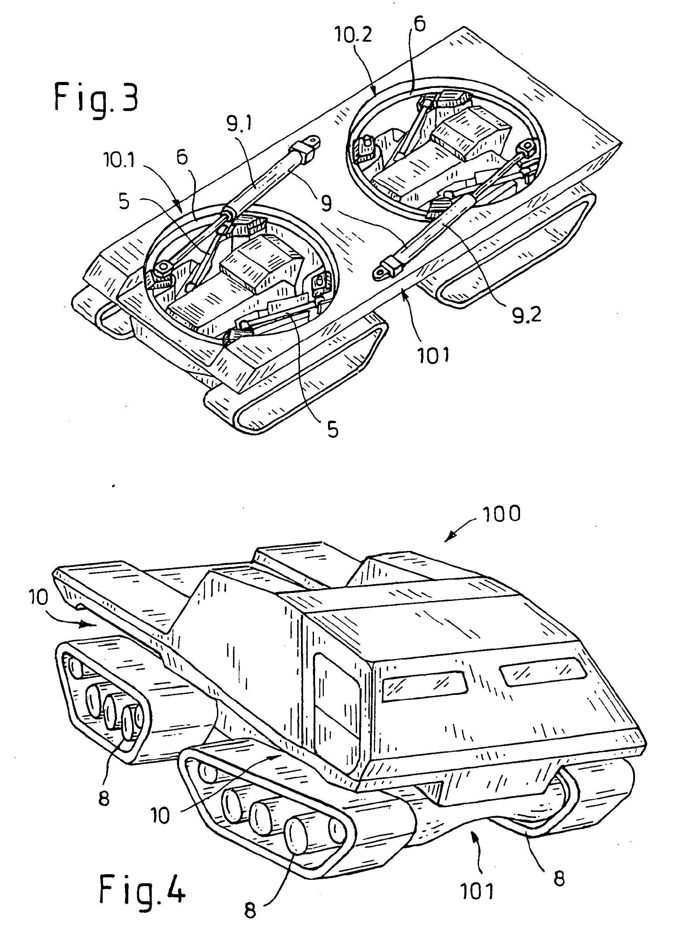

In Fig. 3 sind wenigstens zwei Lenkzylinder 9 dargestellt, wobei der Lenkzylinder 9.1 einerseits mit der vorderen Drehschemeleinheit 10.1 und dem Chassis 1 und der zweite Lenkzylinder 9.2 mit einem Fahrzeugunterteil 101 eines in Fig. 4 dargestellten Fahrzeuges 100 und der hinteren Drehschemeleinheit 10.2 verbunden sind.

### Die Funktionsweise des Fahrantriebes ist wie folgt:

Die Lenkzylinder 9 sind in normaler Antriebsart derart mit einer Lenkung (nicht näher dargestellt) des Fahrzeuges 100 verbunden, dass bei einem rechten Lenkeinschlag der Lenkzylinder 9.1 die vordere Drehschemeleinheit 10.1 und der zweite Lenkzylinder 9.2 die hintere Drehschemeleinheit 10.2 jeweils nach rechts ziehen oder bei einem linken Lenkeinschlag entsprechend nach links. Das Verdrehen der Drehschemeleinheiten 10 wird durch den jeweiligen Drehkranz 6 ermöglicht. Die Schubstützen 5 unterstützen die Lenkzylinder 9. Das Fahrzeug 100 reagiert somit wie ein normal gelenktes Radfahrzeug, die Laufkettenpaare 8 werden symmetrisch miteinander verstellt.

Selbstverständlich ist bei entsprechender Trennung der beiden Lenkzylinder 9.1, 9.2 von der "normalen" Lenkung ein Verdrehen der Drehschemeleinheiten 10 unterhalb des Fahrzeuges 100 gegeneinander möglich. In diesem Fall würde der Lenkzylinder 9.1 die vordere Drehschemeleinheit 10.1 beispielsweise nach rechts verdrehen, der zweite Lenkzylinder 9.2 die hintere Drehschemeleinheit 9.2 hingegen nach links oder umgekehrt. Die Laufkettenpaare 8 werden wie bei einem größeren Baufahrzeug dadurch asymmetrisch zueinander verstellt. Dies ermöglicht dann ein seitwärts Fahren oder ein Fahren im Kreis etc.

Die hydropneumatische Drehschemel-Federungen 7 in den Drehschemeleinheiten 10 haben vorrangig die Aufgabe, Stoßeinwirkungen aufzufangen und dienen zur Entkopplung zum Fahrzeug 100.

## Patentansprüche

1. Fahrantrieb für ein Fahrzeug (100), aufweisend mehrere Laufketten, wobei wenigstens zwei Drehschemeleinheiten (10) am Fahrzeug (100) vorgesehen sind, mit wenigstens jeweils zwei rechts und links angebrachten und ein Laufkettenpaar (8) bildenden Fahrantrieben, wobei die Drehschemeleinheiten (10) über jeweils einen Drehkranz (6) mit dem Fahrzeug (100) verbunden und über diesen zum Fahrzeug (100) verdrehbar sind, **dadurch gekennzeichnet, dass** die Drehschemeleinheiten (10) über am Fahrzeug (100) befestigte und mit den Drehschemeleinheiten (10) verbundene Lenkzylinder (9) verdreht werden, wobei ein Lenkzylinder (9.1) mit der vorderen Drehschemeleinheit (10.1) und ein zweiter Lenkzylinder (9.2) mit der hinteren Drehschemeleinheit (10,2) verbunden sind, die ihrerseits mit einer fahrzeugseitigen Lenkung verbunden sind.

2. Fahrantrieb nach Anspruch 1, **dadurch gekennzeichnet, dass** eine symmetrische oder asymmetrische Lenkung möglich ist, wobei bei einer symmetrischen Auslenkung die Drehschemeleinheiten (10) in dieselbe Richtung ausgelenkt werden und bei einer asymmetrischen Auslenkung entgegengesetzt.

3. Fahrantrieb nach Anspruch 1 oder 2, **dadurch gekennzeichnet, dass** die Drehschemeleinheiten (10) zur Aufnahme eines elektrischen Antriebes (2), eines damit verbundenen Getriebes (3) sowie eines Kraftstoffbehälters (4) fungieren können.

4. Fahrantrieb nach einem der Ansprüche 1 bis 3, **dadurch gekennzeichnet, dass** wenigstens eine Drehschemeleinheit (10) einen elektrischen Antrieb (2) und das damit verbundene Getriebe (3) aufweist.

5. Fahrantrieb nach einem der Ansprüche 1 bis 4, **dadurch gekennzeichnet, dass** Drehschemel-Federungen (7) in den Drehschemeleinheiten (10) eingebunden sind.

6. Fahrantrieb nach Anspruch 5, **dadurch gekennzeichnet, dass** die Federungen (7) zwischen dem Chassis (1) der Drehschemeleinheit (10) und dem Drehkranz (6) integriert sind.

7. Fahrantrieb nach einem der Ansprüche 1 bis 6, **dadurch gekennzeichnet, dass** Schubstützen (5) in den Drehschemeleinheiten (10) die Lenkzylinder (9) unterstützen.

8. Fahrantrieb nach einem der Ansprüche 1 bis 7, **dadurch gekennzeichnet, dass** ein selbstständiges Anheben einer Laufwerk-Seite möglich ist.

9. Fahrantrieb nach einem der Ansprüche 3 bis 8, **dadurch gekennzeichnet, dass** der Antrieb (2) ein herkömmlicher Motor ist.

10. Fahrantrieb nach einem der Ansprüche 1 bis 9 **gekennzeichnet durch** Eigenschaften eines Drehschemels in Weiterführung mit einem Knicklenker.

## Claims

1. Traction drive for a vehicle (100), having a plurality of crawlers, wherein at least two turntable units (10) are provided on the vehicle (100), each having at least two traction drives mounted on the right and the left and forming a pair of crawlers (8), wherein the turntable units (10) are connected to the vehicle (100) via in each case one live ring (6) and can be rotated via the latter with respect to the vehicle (100), **characterized in that** the turntable units (10) are rotated via steering cylinders (9) fixed to the vehicle (100) and connected to the turntable units (10), wherein one steering cylinder (9.1) is connected to the front turntable unit (10.1) and a second steering cylinder (9.2) is connected to the rear turntable unit (10.2), said turntable units being in turn connected to a steering system on the vehicle.

2. Traction drive according to Claim 1, **characterized in that** symmetrical or asymmetrical steering is possible, wherein the turntable units (10) are steered in the same direction in the case of symmetrical deflection and in opposite directions in the case of asymmetrical deflection.

3. Traction drive according to Claim 1 or 2,
**characterized in that** the turntable units (10) can serve to accommodate an electric drive (2), a transmission (3) connected thereto and a fuel tank (4).

4. Traction drive according to one of Claims 1 to 3, **characterized in that** at least one turntable unit (10) has an electric drive (2) and the transmission (3) connected thereto.

5. Traction drive according to one of Claims 1 to 4, **characterized in that** turntable suspension systems (7) are incorporated into the turntable units (10).

6. Traction drive according to Claim 5, **characterized in that** the suspension systems (7) are integrated between the chassis (1) of the turntable unit (10) and the live ring (6).

7. Traction drive according to one of Claims 1 to 6, **characterized in that** sliding supports (5) support the steering cylinders (9) in the turntable units (10).

8. Traction drive according to one of Claims 1 to 7, **characterized in that** independent lifting of one side of the running gear is possible.

9. Traction drive according to one of Claims 3 to 8, **characterized in that** the drive (2) is a conventional motor.

10. Traction drive according to one of Claims 1 to 9, **characterized by** properties of a turntable and, by extension, an articulated link.

## Revendications

1. Entraînement de roulement pour un véhicule (100), comportant plusieurs chenilles, dans lequel il est prévu au moins deux unités de sellette (10) sur le véhicule (100), avec au moins chaque fois deux entraînements de roulement disposés à droite et à gauche et formant une paire de chenilles (8), dans lequel les unités de sellette (10) sont respectivement reliées au véhicule (100) par une couronne d'orientation (6) et sont aptes à tourner par rapport au véhicule (100) au moyen de celle-ci, **caractérisé en ce que** les unités de sellette (10) sont actionnées en rotation au moyen de cylindres de direction (9) fixés sur le véhicule (100) et reliés aux unités de sellette (10), dans lequel un cylindre de direction (9.1) est relié à l'unité de sellette antérieure (10.1) et un deuxième cylindre de direction (9.2) est relié à l'unité de sellette postérieure (10.2), qui sont à leur tour reliées à une direction côté véhicule.

2. Entraînement de roulement selon la revendication 1, **caractérisé en ce qu'**une direction symétrique ou asymétrique est possible, dans lequel les unités de sellette (10) pivotent dans le même sens lorsque la rotation est symétrique et dans les sens opposés lorsque la rotation est asymétrique.

3. Entraînement de roulement selon la revendication 1 ou 2, **caractérisé en ce que** les unités de sellette (10) peuvent servir à loger un entraînement électrique (2), une transmission (3) reliée à celui-ci ainsi qu'un réservoir de carburant (4).

4. Entraînement de roulement selon l'une quelconque des revendications 1 à 3, **caractérisé en ce qu'**au moins une unité de sellette (10) contient un entraînement électrique (2) ainsi que la transmission (3) reliée à celui-ci.

5. Entraînement de roulement selon l'une quelconque des revendications 1 à 4, **caractérisé en ce que** des suspensions de sellette (7) sont incorporées dans les unités de sellette (10).

6. Entraînement de roulement selon la revendication 5, **caractérisé en ce que** les suspensions (7) sont intégrées entre le châssis (1) des unités de sellette (10) et la couronne d'orientation (6).

7. Entraînement de roulement selon l'une quelconque des revendications 1 à 6, **caractérisé en ce que** des bielles (5) supportent les cylindres de direction (9) dans les unités de sellette (10).

8. Entraînement de roulement selon l'une quelconque des revendications 1 à 7, **caractérisé en ce qu'**un soulèvement indépendant d'un côté de chenille est possible.

9. Entraînement de roulement selon l'une quelconque des revendications 3 à 8, **caractérisé en ce que** l'entraînement (2) est un moteur conventionnel.

10. Entraînement de roulement selon l'une quelconque des revendications 1 à 9, **caractérisé par** des propriétés d'une sellette à continuer avec un véhicule articulé.
